**Europäisches Patentamt**

**European Patent Office**

**Office européen des brevets**

(19)

(11) Veröffentlichungsnummer: **0 200 025**
**B1**

(12) **EUROPÄISCHE PATENTSCHRIFT**

(45) Veröffentlichungstag der Patentschrift: **13.06.90**

(51) Int. Cl.⁵: **B 65 G 47/90**

(21) Anmeldenummer: **86104607.6**

(22) Anmeldetag: **04.04.86**

(54) Vorrichtung zum Aufnehmen und Umsetzen von Gebinden.

(30) Priorität: **02.05.85 DE 3515818**

(43) Veröffentlichungstag der Anmeldung:
**05.11.86 Patentblatt 86/45**

(45) Bekanntmachung des Hinweises auf die
Patenterteilung:
**13.06.90 Patentblatt 90/24**

(84) Benannte Vertragsstaaten:
**BE DE FR GB IT NL**

(56) Entgegenhaltungen:
**DE-A-2 802 738**
**DE-B-1 214 150**
**US-A-4 435 118**

**CHIRONIS, "Mechanisms, Linkages and
Mechanical Controls, New York 1965, page 52**

**Die Akte enthält technische Angaben, die nach
dem Eingang der Anmeldung eingereicht
wurden und die nicht in dieser Patentschrift
enthalten sind.**

(73) Patentinhaber: **Max Kettner
Verpackungsmaschinenfabrik GmbH & Co. KG
Ottobrunner Strasse 1
D-8000 München 83 (DE)**

(72) Erfinder: **Zaissl, Peter, Ing.
Föhrenweg 5
D-8201 Grosskarolinenfeld (DE)**
Erfinder: **Schmied, Ernst, Dipl.-Ing.
Sepp-Strassberger-Strasse 6
D-8208 Kolbermoor (DE)**

(74) Vertreter: **Dipl.-Ing. Schwabe, Dr. Dr. Sandmair,
Dr. Marx
Stuntzstrasse 16 Postfach 86 02 45
D-8000 München 86 (DE)**

**Beschreibung**

Die Erfindung betrifft einen Knickarmförderer zum Aufnehmen und Umsetzen von Gebinden.

Insbesondere in der Nahrungsmittelindustrie, und zwar meist in der Getränkeindustrie, werden als "Palettierer" bezeichnete Vorrichtungen verwendet, um aus Dosen, Flaschen, Kartons oder sonstigen Einzelgegenständen gebildete, eine ebene Schicht bildende Gebinde zu ergreifen, aufzunehmen und auf einer Palette zu stapeln oder umgekehrt von einem auf einer Palette befindlichen Stapel abzunehmen und an einer hierzu bestimmten Station abzusetzen.

In der gebräuchlichsten Bauweise weist eine solche Vorrichtung ein portalartiges Maschinengestell auf, an dessen Traverse ein Wagen hin- und hergefahren werden kann, an dessen Unterseite ein absenkbarer Greiferkopf angebracht ist.

Der Raumbedarf für einen solchen Portalrahmen ist verhältnismäßig groß, und die Unterbringung dieses Rahmens innerhalb einer Anlage, etwa einer Anlage zum Palettiern von Flaschen, ist schwierig, da die Förderströme für Leerpaletten, Gebinde und gefüllte Paletten jeweils den Stellraum für die beiden vertikalen Säulen des Portalrahmens aussparen müssen, deren Abstand festliegt. Somit ist eine solche bekannte Vorrichtung nur wenig flexibel und verursacht besonders dann Probleme, wenn eine bereits einmal errichtete Anlage, in der diese Vorrichtung enthalten ist, unter Beibehaltung dieser Vorrichtung umgerüstet werden soll. Es wäre zwar grundsätzlich möglich, Vorrichtungen dieser Art mit unterschiedlich langer Traverse herzustellen, aber hierdurch würde eine höchst unerwünschte Typenvielfalt geschaffen.

Nachteilig ist ferner der Umstand, daß die Versorgungsleitungen, unter denen sich auch Saug- und Druckleitungen befinden können, dem bewegten, den Greiferkopf tragenden Wagen stets nachgeführt werden müssen und somit unvermeidlich durchhängen.

Um einem Teil dieser Nachteile abzuhelfen, ist es aus der DE-OS 31 13 976 bekannt, der horizontalen Holm mittig nur noch an einer einzigen horizontalen Säule anzubringen. Da aber der horizontale Holm stets so lang bemessen sein muß, daß er jene horizontale Bewegungsstrecke für den Greiferkopf zulassen muß, für die die Vorrichtung ausgelegt ist, ist auch die bekannte Vorrichtung sperrig und somit im Einsatz wenig flexibel. Ferner existiert auch hier das Problem der durchhängenden Versorgungsleitungen für den Greiferkopf.

Um diesen Schwierigkeiten abzuhelfen, ist aus der DE—A 33 03 922 eine Umsetzeinrichtung bekannt, bei welcher an einer vertikalen säule ein horizontales Parallelogrammgestänge angebracht ist, dessen verschwenkbare Traverse den Greiferkopf trägt.

In Abhängigkeit von der Bewegungsstrecke, die für den Greiferkopf erforderlich ist, ändert sich auch die Größe des vom Parallelogrammgestänge überstrichenen Bereichs, so daß diese Umsetzeinrichtung an vorliegende Aufbauerfordernisse besser anpaßbar ist als die vorher erörterten Vorrichtungen. Es wird auch dem Problem der durchhängenden Versorgungsleitungen abgeholfen, da diese stets längs des Schwenkarmes geführt werden können.

Diese Umsetzeinrichtung hat aber gegenüber den obengenannten Vorrichtungen einen entscheidenden Nachteil: Das umzusetzende Gebinde legt während des Umsetzvorganges eine kreisbogenförmige Bewegungsbahn zurück. Wenn dieser Umsetzvorgang so rasch erfolgen soll, wie man dies von einem leistungsfähigen Palettierer erwartet, dann wirken zusätzlich zu den unvermeidlichen Beschleunigungskräften auch noch erhebliche Fliehkräfte auf die vom Greiferkopf getragenen Gebinde ein, welche die Arbeitsgeschwindigkeit des Palettierers begrenzen und zu Störungen Anlaß geben könne. Außerdem muß der bogenförmige Bewegungsweg durch Sicherheitsabsperrungen gegenüber dem Zutritt versperrt werden, wobei Teile einer Palettieranlage, die für Einstellungs- und Wartungsarbeiten zugänglich sein müssen, innerhalb des abgesperrten Sicherheitsbereiches liegen.

Aus diesem Grunde konnten sich die mit einem Schwenkarm versehenen Umsetzeinrichtungen in der Praxis nicht durchsetzen.

Weiterhin geht aus der DE—B 1 214 150 ein Knickarmförderer zum Aufnehmen und Umsetzen von Glasscheiben mit einem Maschinengestellt mit einem horizontalen, an einer ortsfesten Lagerung angeordneten, ersten Armglied hervor; das erste Armglied weist an beiden Enden je eine Schwenklagerung mit vertikaler Achse und einen ersten Achsabstand auf und ist mit der einen Schwenklagerung an der ortsfesten Lagerung durch einen ersten Schwenkantrieb mit einer ersten Winkel geschwindigkeit schwenkbar gelagert; ein zweites Armglied weist an beiden Enden je eine Schwenklagerung mit vertikaler Achse und mit einem zweiten Achsabstand auf und ist mit der einen Schwenklagerung an der Unterseite der freien Schwenklagerung des ersten Armgliedes durch einen zweiten Schwenkantrieb mit eine zweiten Winkelgeschwindigkeit gelagert; an der freien Schwenklagerung des zweiten Armgliedes, bevorzugt an seiner Unterseite, ist ein Greiferkopf anhebbar und abschwenkbar angebracht und durch einen dritten Schwenkantrieb mit einer dritten Winkelgeschwindigkeit schwenkbar gelagert; die erste Winkelgeschwindigkeit des ersten Schwenkantriebes ist gleich der dritten Winkelgeschwindigkeit des dritten Schwenkantriebes; die drei Schwenkantriebe stehen über Ketten- oder Zahnriemengetriebe miteinander in Zwangsverbindung und sind von einem einzigen Antriebsmotor angetrieben.

Dabei werden Kettenantriebe verwendet, wobei ausdrücklich hervorgehoben ist, daß die beiden Armglieder gleich lang sein sollen. Dadurch läßt sich jedoch nur eine geradlinige Bewegung des Greiferkopfes realisieren, die nur für wenige, bestimmte Anwendungsfälle geeignet ist. Außerdem stehen die dort verwendeten Zahnräder, selbst bereits die kleineren Zahnräder, weit über die Armglieder hinaus vor, so daß hier die Gefahr von Verletzungen besteht. Deshalb muß dieser Knickarmförderer von einer Ausreichenden Sicherheitszone umgeben sein.

Ein ähnlicher Knickarmförderer zum Aufnehmen und Umsetzen von Werkstücken geht aus der DE—A—28 02 738 hervor, wobei das jeweils zu handhabende Werkstück nur geradlinig bewegt werden muß. Für das Aufnehmen und Umsetzen von Gebinden, insbesondere in der Getränkeindustrie, ist jedoch eine solche Bewegung nicht geeignet.

Der Erfindung liegt deshalb die Aufgabe zugrunde, einen Knickarmförderer zum Aufnehmen und Umsetzen von Gebinden zu schaffen, bei dem unter Inanspruchnahme einer relativ kleinen Aufstellfläche der vom Greiferkopf in horizontaler Richtung zurückgelegte Weg eine extrem kleine Krümmung aufweist und sich damit einer geradlinigen Bewegung annähern soll.

Diese Aufgabe wird erfingungsgemäß durch die Merkmale des Anspruchs 1 gelöst.

Zweckmäßige Ausführungsformen werden durch die Merkmale der Unteransprüche definiert.

Die mit der Erfindung erzielten Vorteile beruhen darauf, daß die erste Winkelgeschwindigkeit ($\omega_1$), mit der das erste Armglied um die ortsfeste Lagerung schwenkt, und die zweite Winkelgeschwindigkeit ($\omega_2$), mit der das zweite Armglied um das Ende des ersten Armgliedes schwenkt, in einem solchen Zusammenhang stehen, daß das den Greiferkopf tragende freie Ende des zweiten Armgliedes ganz oder teilweise dem Ast einer Hypozykloide folgt. Die im Anspruch 1 genannte geometrische Beziehung entspricht genau der eigentlichen Hypozykloide, bei der der Radius des Außenkreises der Summe der wirksamen Längen beider Glieder entspricht, während der Radius des Innenkreises, der auf dem Außenkreis abrollt, der wirksamen Länge des zweiten Armgliedes entspricht, das an seinem freien Ende den Greiferkopt trägt.

Bei der angegebenen geometrischen Beziehung zwischen den Achsabsänden ($l_1$, $l_2$) der beiden Armglieder läuft der Greiferkopf sehr nahe an der ortsfesten Lagerung vorbei, legt jedoch gleichzeitig eine Bahnkurve mit einer sehr geringen Krümmung zurück, deren Auswirkung auf das vom Greiferkopf getragene Gebinde jener einer geraden Bahnkurve gleichkommt.

Bei dieser Bahnkurve werden die Querbeschleunigungen und Fliehkräfte, die beim Umsetzen, beispielsweise von Flaschenkästen auf die einzelnen Flaschen eines Gebindes wirken, auf ein Minimum reduziert, damit eine leistungsfähige und trotzdem materialschonende und lärmreduzierte Umsetzung erreicht werden kann.

Ein weiterer Vorteil diese Verhältnisses der beiden Achsabstände liegt in der erzielbaren Bauhöhenreduzierung eines solchen Knickarmförderers, da vor Ort oft sehr beengte Raumverhältnisse gegeben sind. Die geringere Bauhöhe ergibt sich, bedingt durch das ermittelte Verhältnis, aus dem Vorbeischwenken des kurzen Armgliedes an der ortsfesten Lagerung und erfordert somit keinen zusätzlichen Höhenbauraum.

Die Verwendung eines einzigen Antriebsmotors hat den Vorteil größere Robustheit und Betriebssicherheit im Vergleich mit den prinzipiell auch einsetzbaren, einzelnen Motoren.

Ein solcher Knickarmförderer kann ein relativ einfaches Getriebe benutzen, um die verhältnismäßig komplizierte Bahnkurve des Greiferkopfes zuverlässig und reduzierbar zu erzeugen.

Der Sicherheitsbereich, der vom Personal nicht betreten werden darf, führt bis an die Bewegungsstrecke des Greiferkopfes heran, da sich jene Teile der beiden Armglieder, die über diese Bewegungsstrecke in ihrer Mitte hinausragen, in einer solcher Höhe bewegen, daß sie keine Gefährdung für das Personal bilden.

Dieser Sicherheitsaspekt wird auch dadurch unterstützt, daß die Ketten bzw. Zahnriemen innerhalb der Armglieder laufen und deshalb nicht über die Armglieder hinaus vorstehen, also das Personal praktisch nicht mit den Antriebselementen in Berührung kommen kann.

Die Erfindung wird im folgenden anhand eines Ausführungsbeispiels unter Bezugnahme auf die beiliegenden schematischen Zeichnungen näher erläutert. Es zeigen:

Fig. 1a—1c Kurvendarstellungen einer Hypozykloide bzw. einer verlängerten Hypozykloide bzw. einer verkürzten Hypokloide,

Fig. 2 eine schematische Draufsicht auf die beiden Armglieder eines erfingungsgemäßen Knickarmförderers,

Fig. 3 einen Aufriß des erfindungsgemäßen Knickarmförderers, und

Fig. 4 eine Draufsicht auf einen Anlagenteil, bei dem ein erfindungsgemäßer Knickarmförderer engesetzt ist.

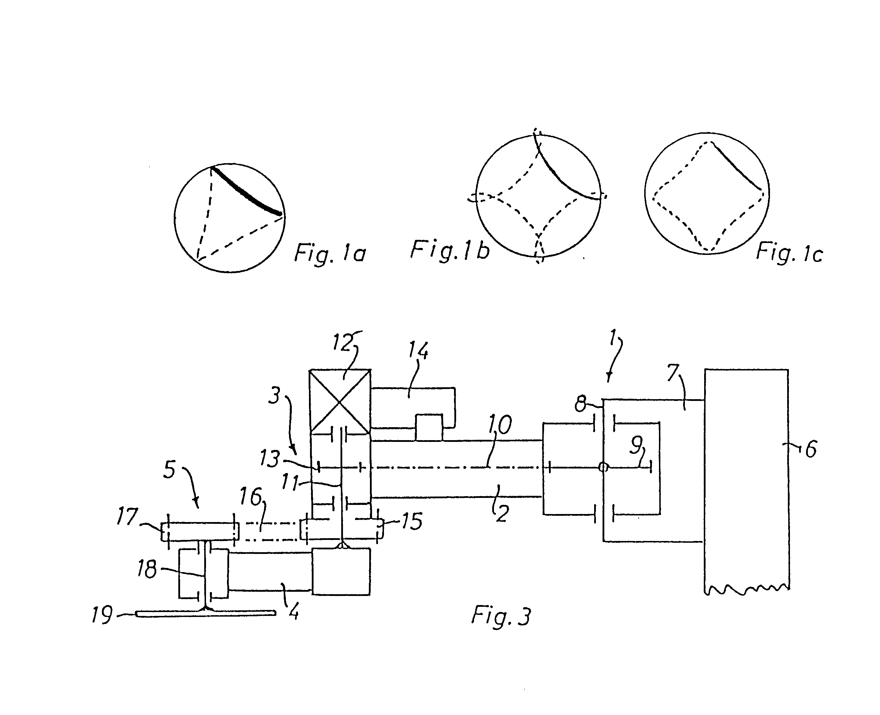

In Fig. 1a ist eine Hypozykloide gezeigt, also eine Kurve, die von einem Peripheriepunkt eines Kreises beschrieben wird, wenn dieser schlupffrei auf der Innenseite eines anderen Kreises abrollt.

In Fig. 1b ist eine verlängerte Hypozykloide gezeigt, während in Fig. 1c eine verkürzte Hypokloide gezeigt ist, also jeweils eine Kurve, die von einem Punkt beschrieben wird, der außerhalb (Fig. 1b) bzw. innerhalb (Fig. 1c) eines schlupffrei am Innenumfang eines anderen Kreises abrollenden Kreises liegt.

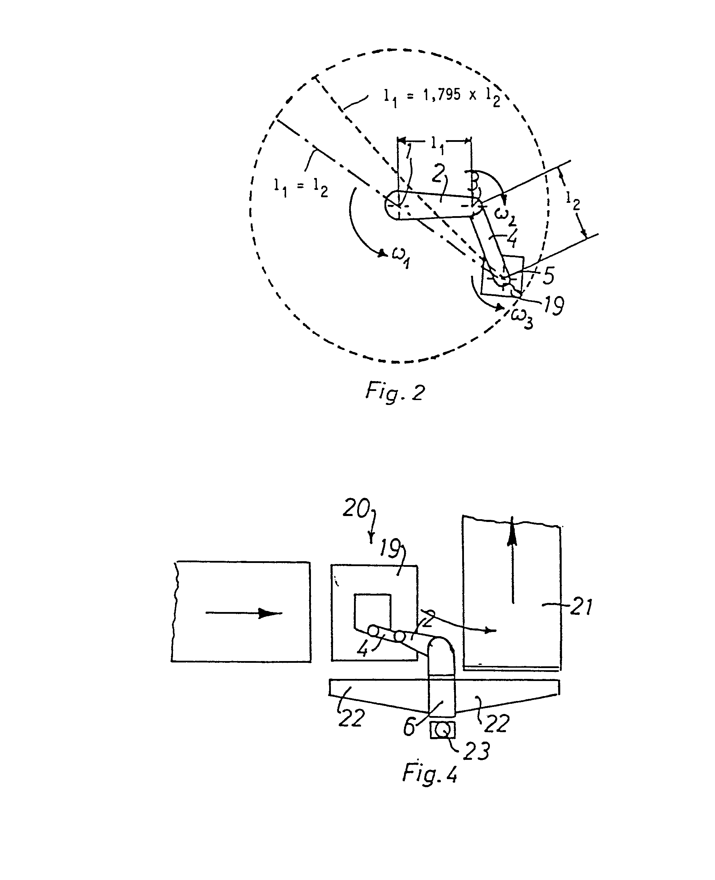

In Fig. 2 ist der zweigliedrige Schwenkarm eines erfindungsgemäßen Knickarmförderers in Draufsicht schematisch gezeigt. Dieser weist ein erstes, um ein ortsfestes Lager 1 horizontal schwenkbares Armglied 2 auf, welches an seinem freien Ende ein Schwenklager 3 trägt, in welchem horizontal schwenkbar ein zweites Armglied 4 gelagert ist, welches seinerseits an seinem freien Ende ein Schwenklager 5 trägt, an welchem ein in Fig. 2 nicht gezeigter Greiferkopf schwenkbar gelagert ist.

Das erste Armglied 2 soll entgegen dem Uhrzeigersinn um die Achse des ortsfesten Drehlagers 1 mit einer Winkelgeschwindigkeit $\omega_1$ rotieren. In diesem Fall rotiert das zweite Armglied 4 um das Schwenklager 3 im Uhrzeigersinn mit einer Winkelgeschwindigkeit $\omega_2$. Am freien Ende des zweiten Armgliedes 4 rotiert schließlich der Greiferkopf entgegen dem Uhrzeigersinn mit einer dritten Winkelgeschwindigkeit $\omega_3$.

Die wirksame Länge des ersten Armgliedes 2, nämlich der Abstand zwischen den Achsen der Lager 1 und 3, wird nachfolgend mit $l_1$ bezeichnet. Die wirksame Länge des zweiten Armglieds 4, also der Abstand der Achsen der Lager 3 und 5, wird mit $l_2$ bezeichnet. Es gilt:

$$\omega_2 = \frac{l_1 + l_2}{l_2} \cdot \omega_1, \text{ und}$$

$$\omega_1 = \omega_3$$

Wenn $l_1$ und $l_2$ gleich sind, dann legt die Achse des Lagers 5 die in Fig. 2 strichpunktiert gezeigte Bahnkurve zurück, nämlich eine Gerade. Die Bahn Kurve gemäß der Erfindung ist jedoch durch die gestrichelte Linie dargestellt, die eine sehr schwache Krümmung hat. Die gestrichelte Kurve geht zurück auf die folgenden Längenverhältnisse:

$$l_1 = 1{,}795 \, l_2.$$

In diesem Fall verhalten sich die Winkelgeschwindigkeiten wie folgt:

$$\omega_1 = 0{,}36 \, \omega_2$$

Die gezeigte Bahnkurve entspricht dem Ast einer Hypozykloide, wie sie in Fig. 1a gezeigt ist (für $l_1 = 3.l_2$). Wenn die Winkelgeschwindigkeiten nicht genau auf die geometrischen Verhältnisse abgestimmt sind, wie dies entweder durch Fertigungsungenauigkeiten der Fall sein kann, aber auch etwa zum Zwecke der Anpassung des Verlaufs einer Bahnkurve, dann ergeben sich die in Fig. 1b oder 1c gezeigten Bahnkurven. Endschalter sorgen dafür, daß die Achse 5 nur den in den Fig. 1a bis 1c ausgezogen gezeigten einen Ast einer Bahnkurve durchläuft, nicht aber die gesamte Bahnkurve.

In Fig. 3 ist ein erfindungsgemäßer Knickarmförderer schematisch im Aufriß gezeigt und weist eine vertikale Säule 6 auf, die auf dem Boden bevorzugt über Abstützungen verankert ist und von der nur der obere Teil gezeigt ist.

An der Oberseite der vertikalen Säule 6 ist ein überstehenden Schenkelabschnitt 7 angebracht, der das ortsfeste Lager 1 trägt.

Koaxial zur vertikalen Achse dieses ortsfesten Lagers 1 ist eine unverdrehbare Welle 8 angeordnet, die ein schematisch gezeigtes, horizontales Kettenrad 9 unverdrehbar trägt. Obwohl in der Zeichnung schematisch nur ein Kettenrad gezeigt ist, wird in der Regel ein Kettenradpaket verwendet, da zur Übertragung der erforderlichen Antriebskräfte in der Regel mehrere Ketten erforderlich sind.

Oberhalb und unterhalb des Kettenrades 9 ist das dem Lager 1 zugewandte Ende des ersten Armgliedes 2 in Drehlagern abgestützt.

Das Armglied 2 ist als hohler kastenträger ausgebildet, wobei in dessen Innenraum eine Laschenkette (oder mehrere parallele Laschenketten) 10 verläuft, die über das unverdrehbare Zahnrad 9 geschlungen ist.

Am abgewandten Ende des ersten Armgliedes 2 befindet sich die Drehlagerung 3. Koaxial zu deren vertikaler Achse ist eine Welle 11 angeordnet, welche mit der Abtriebswelle eines Winkelgetriebes 12 verbunden ist, das oberhalb des ersten Armglieds 2 angebracht ist. Ein Motor 14 ist oberhalb des ersten Armglieds 2 angeordnet und an diesem befestigt und mit dem Winkelgetriebe 12 verflanscht.

Die Welle 11 trägt ein Kettenrad 13, das über die Kette 10 mit dem Kettenrad 9 verbunden ist. Innerhalb des ersten Armgliedes 2 kann, falls erforderlich, eine kettenspanneinrichtung für die Kette 10 angebracht sein.

Die an der Ober- und Unterseite des ersten Armglieds 2 drehbar gelagerte Welle 11 ist nach unten über dieses hinaus verlängert und drehfast mit dem zugewandten Ende des zweiten Armgliedes 4 verbunden.

Es ist ersichtlich, daß die Drehung des Elektromotors 14 über das Winkelgetriebe 12 die Welle 11 und damit das Zahnrad 13 treibt, welches sich relativ zum ersten Armglied 2 mit derselben Winkelgeschwindigkeit bewegt wie das zweite Armglied 4. Gleichzeitig wird durch das Kettenrad 13 die Kette 10 angetrieben, die um das ortsfeste Zahnrad 9 herumgelegt ist, so daß dementsprechend das erste Armglied 2 eine Schwenkbewegung um die Welle 8 herum durchführt, und zwar in Gegenrichtung zur Schwenkbewegung des zweiten Armgliedes 4 um die Achse der Schwenklagerung 3.

An der Unterseite des freien Endes des ersten Armgliedes 2, jedoch noch oberhalb des zweiten Armgliedes 4 ist ein drittes Kettenrad 15 drehfast mit dem ersten Armglied 2 verbunden. Dieses Kettenrad 15 ist über eine weitere Antriebskette 16 mit einem vierten Kettenrad 17 verbunden, welches koaxial zur Lagerung 5 angebracht ist und auf dem oberen Ende einer vertikalen Welle 18 sitzt, die am unteren Ende eine Befestigung 19 für einen Greiferkopf trägt. An dieser Befestigung 19 ist die Hubeinrichtung für den Greiferkopf angebracht; Hubeinrichtung und Greiferkopf sich jedoch aus Gründen der Klarheit in der Zeichnung nicht gezeigt.

Er ist ersichtlich, daß dann, wenn das zweite Armglied 4 eine Schwenkbewegung relativ zum ersten Armglied 2 durchführt, auch das vierte Zahnrad 17 eine Drehbewegung durchführt, und zwar gegenläufig zu der schwenkbewegung zwischen den beiden Armgliedern 2, 4 und gleichläufig zur Schwenkbewegung des Armgliedes 2 um das ortsfeste Lager 1.

Die Zähnezahlen der Zahnräder 13 und 9 verhalten sich bevorzugt wie 21 und 59 wobei das Kettenrad 9 mehr als doppelt soviel Zähne wie das Kettenrad 13 aufweist.

Die Zähnezahlen der Kettenräder 17 und 15 verhalten sich wie 29 und 45, wobei das Kettenrad 15 fast die doppelte Zähnezahl aufweist wie das Kettenrad 17.

Da die Summen der beiden Übersetzungen 1 bilden, ist ersichtlich, daß die Halterung 19 für den Greiferkopf stets ihre Orientierung beibehält.

Der einfacheren Darstellung halber sind die Kettenräder 15 und 17 oberhalb des zweiten Armgliedes 4 gezeigt; in der Praxis liegen diese beiden Kettenräder jedoch unterhalb dieses Armgliedes, um zu verhindern, daß zu hohe Biegemomente auf die Welle 13 bzw. die zugehörige Lagerung 3 aufgebracht werden.

In Fig. 4 ist der Teil einer Palettieranlage in Draufsicht gezeigt, in welcher eine Vorrichtung des in Fig. 3 gezeigten Typs eingesetzt wird.

Wie ersichtlich, ist beiderseits der Mittelsäule 6 eine Abstützung 22 angebracht, mittels welcher die gesamte Vorrichtung standfest auf dem Hallenboden ruht.

An der vom orstfesten Drehlager 1 angewandten Seite der vertikalen Säule 6 ist ein Elektroantrieb 23 angebracht, der als Hubantrieb dienen kann, mittels welchem bevorzugt der gesamte Schwenkarm 2, 4 auf- und abwärts gehoben wird. Es ist aber auch möglich, den Hubantrieb für den Greiferkopf an der Halterung 19 anzubringen (Fig. 3).

Wie aus Fig. 4 ersichtlich, nimmt die gezeigte Vorrichtung an der Annahmestation 20 ankommende Gebinde auf und setzt sie um auf die Station 21, wo sie übereinander geschichtet werden können.

**Patentansprüche**

1. Knickarmförderer zum Aufnehmen und Umsetzen von Gebinden mit den folgenden Merkmalen:
—ein Maschinengestell mit einem horizontalen, an einer ortsfesten Lagerung (1) geordneten, ersten Armglied (2);
—das erste Armglied (2) weist an beiden Enden je eine Schwenklagerung (3) mit vertikaler Achse und einem ersten Achsabstand ($l_1$) auf und ist mit der einen Schwenklagerung an der ortsfesten Lagerung (1) durch einen ersten Schwenkantrieb mit einer ersten Winkelgeschwindigkeit ($\omega_1$) scwhenkbar gelagert;
—ein zweites Armglied (4) weist an beiden Enden je eine Schwenklagerung (3, 5) mit vertikaler Achse und mit einem zweiten Achsabstand ($l_2$) auf und ist mit der einen Schwenklagerung an der Unterseite der freien Schwenklagerung (3) des ersten Armgliedes (2) durch einen zweiten Schwenkantrieb mit einer zweiten Winkelgeschwindigkeit ($\omega_2$) gelagert;
—die Achsabstände ($l_1$, $l_2$) der beiden Armglieder (2, 4) verhalten sich wie

$$l_1 = 1,795 \times l_2;$$

—die erste Winkelgeschwindigkeit ($\omega_1$) verhält sich zur zweiten Winkelgeschwindigkeit ($\omega_2$) wie

$$\omega_1 \approx 0,36\ \omega_2;$$

—an der freien Schwenklagerung des zweiten Armgliedes (4), bevorzugt an seiner Unterseite, ist ein Greifkopf anhebbar und absenkbar angebracht und durch eine dritten Schwenkantrieb mit einer dritten Winkelgeschwindigkeit ($\omega_3$) schwenkbar gelagert;
—die erste Winkelgeschwindigkeit ($\omega_1$) des ersten Schwenkantriebs ist gleich der dritten Winkelgeschwindigkeit ($\omega_3$) des dritten Schwenkantriebs;
—die drei Schwenkantriebe stehen über Ketten- oder Zahnriemengetriebe (9, 10, 13 und 15, 16, 17) in Zwangsverbindung miteinander und sind von einem einzigen Antriebsmotor (14) angetrieben; und
—die Ketten bzw. Zahnriemen (10, 16) laufen innerhalb der beiden Armglieder (2, 4).

2. Knickarmförderer nach Anspruch 1, dadurch gekennzeichnet, daß die ortsfeste Lagerung (1) an einem vertikalen Ständer (6) angebracht ist.

3. Vorrichtung nach einem der Ansprüche 1 oder 2, dadurch gekennzeichnet, daß die Ketten- oder Zahnriemengetriebe die folgenden Merkmale aufweisen:
—an der ortsfesten Leitung (1) ist ein erstes Ketten- oder Zahnrad (9) angebracht;
—an dem von dem ersten Ketten- oder Zahnrad (9) abgewandten Ende des ersten Armgliedes (2) sind koaxial ein zweites (13) und drittes (15) Ketten- oder Zahnrad angebracht;
—am abgewandten Ende des zweiten Armgliedes (4) ist ein viertes Ketten- oder Zahnrad (14) angebracht;
—das erste (9) und zweite (13) sowie das dritte (15) und vierte (17) Ketten- bzw. Zahnrad sind jeweils mit einer Kette (10, 16) bzw. einem Zahnriemen verbunden; und
—das zweite Kettenrad (13) ist über eine Welle (11) mit dem zugewandten Ende des zweiten Armgliedes (4) sowie einem als Getriebemotor (12, 14) ausgestalteten Antriebsmotor verbunden.

**Revendications**

1. Transporteur à bras articulés pour la réception et le transfert de récipients, présentant les caractéristiques suivantes:
—un bâti de machine équipé d'un premier bras horizontal (2), disposé dans un palier fixe (1);
—le premier bras (2) présente à chacune de ses deux extrémités un palier pivotant (3) d'axe vertical et à un premier écartement ($l_1$) de l'axe et est monté pivotant à une première vitesse angulaire ($\omega_1$) avec le premier palier pivotant sur le palier fixe (1) par l'intermédiaire d'un premier mécanisme d'entraînement en pivotement;
—un second bras (4) présente à chacune de ses deux éxtrémités un palier pivotant (3, 5) d'axe vertical et à un second écartement ($l_2$) de l'axe et est monté pivotant à une deuxième vitesse angulaire ($\omega_2$) avec le premier palier pivotant sur le côté inférieur du palier pivotant libre (3) du premier bras (2) par un second mécanisme d'entraînement en pivotement;

—la relation entre les écartements ($l_1$, $l_2$) par rapport à l'axe des deux bras (2, 4) est

$$l_1 = 1,795 \times l_2;$$

—la première vitesse angulaire ($\omega_1$) est liée à la seconde vitesse angulaire ($\omega_2$) par la relation

$$\omega_1 \approx 0,36 \; \omega_2;$$

—sur le palier pivotant libre du second bras (4), de préférence sur son côté inférieur, est disposée une tête de préhension pouvant être élevée et abaissée et monté pivotante à une troisième vitesse angulaire ($\omega_3$) par l'intermédiaire d'un troisième mécanisme d'entraînement en pivotement;

—la première vitesse angulaire ($\omega_1$) du premier mécanisme d'entraînement en pivotement est égale à la troisième vitesse angulaire ($\omega_3$) du troisième mécanisme d'entraînement en pivotement;

—les trois mécanismes d'entraînement en pivotement sont reliés entre eux selon une liaison forcée par l'intermédiaire de transmissions à chaîne ou à courroie dentées (9, 10, 13 et 15, 16, 17) et sont entraînés par un unique moteur d'entraînement (14); et

—les chaînes ou les courroies dentées (10, 16) s'étendent à l'intérieur des deux bras (2, 4).

2. Transporteur à bras articulés selon la revendication 1, caractérisé en ce que le palier fixe (1) est disposé sur un montant vertical (6).

3. Dispositif selon l'une des revendications 1 ou 2, caractérisé en ce que les transmissions à chaîne ou à courroie dentées présentent les caractéristiques suivantes:

—une première roue à chaîne ou à dents (9) est disposée sur le palier fixe (1);

—sur l'extrémité du premier bras (2) éloignée de la première roue à chaîne ou à dents (9) sont disposées coaxialement une seconde (13) et une troisième (15) roues à chaîne ou à dents;

—sur l'extrémité du second bras (4) éloignée est disposée une quatrième roue à chaîne ou à dents (14);

—les première (9) et seconde (13) ainsi que les troisième (15) et quatrième (17) roues à chaîne ou à dents sont réunies par une chaîne (10, 16) ou une courroie dentée et

—la seconde roue à chaîne (13) est reliée par l'intermédiaire d'un arbre (11) à l'extrémité proximale du second bras (4) ainsi qu'à un moteur d'entraînement réalisé sous la forme d'un moteur-réducteur (12, 14).

**Claims**

1. A swan neck conveyor for picking up and transferring bundles and having the following features:

—a machine frame with a horizontal first arm member (2) disposed on a rigid mounting (1);

—the first arm member has at both ends a respective pivot bearing (3) with a vertical axis and a first distance ($1_1$) between centres and has one pivot bearing mounted on the fixed bearing (1) in such a way as to be pivotable by a first pivot drive at a first angle speed ($\omega_1$),

—the second arm member (4) has at both ends a respective pivot bearing (3, 5) with a vertical axis and with a second distance ($1_2$) between centres and has one pivot bearing mounted on the underside of the free pivot bearing (3) of the first arm member (2) and is capable of being pivoted by a second pivot drive at a second angular speed ($\omega_2$);

—the ratio of the distances ($1_1$, $1_2$) between the centres of the two arm members (2, 4) are in the following relationship

$$1_1 = 1.795 \times 1_2;$$

—the first angular speed ($\omega_1$) bears the following relationship to the second angular speed ($\omega_2$)

$$\omega_1 \approx 0.36 \; \omega_2;$$

—adapted to be raised and lowered at the free pivot mounting of the second arm member (4), preferably on its underside, is a gripper head which is mounted so that it can be pivoted by a third pivot drive at a third angular speed ($\omega_3$);

—the first angular speed ($\omega_1$) of the first pivot drive is equal to the third angular speed ($\omega_3$) of the third pivot drive;

—the three pivot drives are positively connected to one another via chain or toothed belt transmissions (9, 10, 13 and 15, 16, 17) and are driven by a single driving motor (14), and

—the chains or toothed belts (10, 16) run within the two arm members (2, 4).

2. A swan neck conveyor according to Claim 1, characterised in that the rigid mounting (1) is disposed on a vertical stand (6).

3. An apparatus according to one of Claims 1 or 2, characterised in that the chain or toothed belt transmissions have the following features:

—a first chain or gear wheel (9) is mounted on the fixed mounting (1);

—at the end of the first arm member (2) which is remote from the first chain or gear wheel (9) there is, coaxial with it a second (13) and third (15) chain or gear wheel;

—at the remote end of the second arm member (4) there is a fourth chain or gear wheel (14);

—the first (9) and second (13) as well as the third (15) and fourth (17) chain or gear wheels are in each case connected to a chain (10, 16) or a toothed belt, and

—the second chain wheel (13) is connected by a shaft (11) to the nearer end of the second arm member (4) and to a driving motor which is constructed as a geared motor (12, 14).

Fig. 1a  Fig. 1b  Fig. 1c

Fig. 3

EP 0 200 025 B1

$$l_1 = 1{,}795 \times l_2$$

$$l_1 = l_2$$

Fig. 2

Fig. 4

2